# EUROPEAN PATENT APPLICATION

(11) **EP 1 400 934 A1**
(43) Date of publication of application: **24.03.2004**
(21) Application number: 03255732.4
(22) Date of filing: 12.09.2003
(51) Int. Cl.: G07F 19/00, G06F 1/00, H04L 29/06

(54) **Commerce broker**

(30) Priority: 18.09.2002 US 246958
(71) Applicant: Openwave Systems Inc., Redwood City, CA 94063 (US)
(72) Inventor: Thakur, Madhukar Narayan, San Jose California 95123 (US); Kadison, Avery, Redwood City California 94063 (US)
(74) Representative: W.P. Thompson & Co.

(57) **Abstract**

A method and apparatus for billing a subscriber requesting content available on a wireline network are described. The content is associated with a fee and is requested by the subscriber. The content is provided by a content provider at a wireline network. The fee is charged to an account of the subscriber without disclosing an identity of the subscriber to the content provider.

## Description

### FIELD OF THE INVENTION

The present invention pertains to the field of Internet services. More particularly, the present invention relates to billing customers for accessing Internet services.

### BACKGROUND OF THE INVENTION

With the rapid growth of Internet, more and more people are comfortable utilizing a variety of services provided online. With development of wireless technologies, accessing the Internet via a cellular phone or other wireless device is becoming more and more common. Shopping online for services or goods has become a very convenient option for consumers with busy lifestyles, and the ability to connect with online merchants via a cellular phone enables consumers to make their purchases almost anywhere. Consumers are able to contact a variety of merchants such as digital content merchants (e.g., Ringtones.com, WSJ.com), traditional online merchants (e.g., Amazon.com, Buy.com), "brick-and-mortar" merchants (e.g., Best Buy, Walmart) and service providers (e.g., Wall Street Journal).

Most of the services and goods purchased online require a payment on behalf of the consumer. Although credit cards and related financial accounts are possible methods of payment for online transactions, in some situations these methods are not optimal. Each transaction with a credit card has a complex fee structure associated with it that is borne by merchants. These fees are intended to cover the costs of the network, such as return guarantees, chargeback costs, and fraud protection. For small transactions, the fees can completely outsize the transaction itself. As a result, mobile commerce and online commerce are usually broken down into two classes of transactions: micropayments and macropayments. Macropayments are payments large enough to be handled effectively with credit cards, whereas micropayments are too small to transact economically via a credit card network.

Establishing pre-paid accounts with content providers for every small transaction that a wireless subscriber may want to perform is not feasible. First, the wireless subscriber may not know which content providers' services or goods he/she may desire in advance. For example, the subscriber may find a video clip that he/she would like to view during an online search. If the transaction requires a micropayment, credit card payments may not be accepted by the content provider, i.e., merchant. If the subscriber does not already have a prepaid account with the content provider, the subscriber may be discouraged from requesting to view the video clip after realizing that he/she needs to establish an account and provide the merchant with some funds prior to viewing the video clip. In addition, the subscriber may be further discouraged after realizing that he/she needs to provide the content provider with personal information, such as address, phone number, etc. Providing online content providers with personal contact information often results in the consumer receiving more spam mail, a result that most subscribers do not desire.

There are some services available that will allow the subscriber to request services or goods without establishing multiple prepaid accounts. One of these services, PayPal, can be accessed online. To be able to use PayPal services, a subscriber must establish a prepaid account and transfer funds to the account, or provide PayPal with a credit card number. However, PayPal service supports only wireline networks and does not support wireless networks. In addition, PayPal provides services as an exclusive intermediary, i.e. both subscribers and content providers need to establish relationships with PayPal prior to utilizing its services.

### SUMMARY OF THE INVENTION

The present invention includes a method and apparatus for billing a subscriber for requesting content available on a wireline network. The method may include receiving a request for content associated with a fee, wherein the content is provided by a content provider. The method may also include charging the fee to an account of a subscriber without disclosing an identity of the subscriber to the content provider.

In accordance with a first aspect of the present invention, there is a method comprising:
operating a processing system on a network to receive a request for content with which a fee is associated, wherein the content is to be provided by a content provider on the network; and
operating the processing system to charge the fee to an account of a subscriber requesting the content without disclosing to the content provider the identity of the subscriber.

In accordance with a second aspect of the present invention, there is a processing system comprising:
at least one processor; and
at least one storage facility accessible to the at least one processor and storing software which, when executed by the at least one processor, causes the processing system to perform a process that includes:
   receiving a content request comprising a request for funds generated by a content provider;
   determining whether an account of a subscriber includes sufficient funds; and
   signalling a network server to provide the requested content to the subscriber without disclosing the subscriber's identity if the account includes sufficient funds.

In accordance with a third aspect of the present invention, there is a processing system coupling a wireless network to a wireline network, the processing system comprising:
at least one processor; and
at least one storage facility accessible to the at least one processor and storing software which, when executed by the at least one processor, causes the processing system to perform a process that includes:
   receiving a request for content with which a fee is associated, the request indicating a location of a billing system;
   forwarding the request to the billing system upon authenticating a content provider associated with the content;
   determining whether an account of a user includes sufficient funds in relation to the fee;
   reserving funds in the account to pay the fee if the account includes sufficient funds; and
   confirming the reserved funds without disclosing the identity of the user to the content provider if the requested content is successfully submitted for delivery to the user.

In accordance with a fourth aspect of the present invention, there is a method comprising:
receiving a request for content associated with a fee, wherein the content is to be provided by a content provider;
charging the fee to an account of a subscriber requesting the content without disclosing to the content provider an identity of the subscriber.

In accordance with a fifth aspect of the present invention, there is a method comprising:
receiving a request for content associated with a fee, wherein the content is to be provided by a content provider on a wireline network;
charging the fee to an account of a wireless subscriber without disclosing to the content provider an identity of a subscriber to whom the content is directed.
In accordance with a sixth aspect of the present invention, there is a method comprising:
intercepting a request for content associated with a fee at a gateway, wherein the gateway is coupling a wireless network to a wireline network, the request indicating a location of a billing system;
forwarding the request to the billing system upon authenticating a content provider providing the content at the wireline network;
determining whether an account of a wireless subscriber includes sufficient funds equal to or in excess of an amount of the fee;
reserving the funds equal to an amount of the fee if the account includes sufficient funds;
confirming the reserved funds without disclosing an identity of the subscriber to the content provider if the requested content is successfully submitted for delivery to the subscriber at the wireless device.

In accordance with a seventh aspect of the present invention, there is an apparatus comprising:
a server connected to a wireline network; and
a gateway coupling a wireless network to a wireline network, the gateway configured to receive a content request comprising a request for funds generated by a content provider, the gateway further configured to determine whether an account of a wireless subscriber includes sufficient funds, the gateway further configured to direct the server to provide the requested content to the subscriber without disclosing a subscriber's identity if the account includes sufficient funds.

In accordance with an eighth aspect of the present invention, there is an apparatus comprising:
a device connected to a wireless network, wherein the device is configured to transmit a request for content provided by a server at a wireline network, wherein the content is associated with a fee;
a gateway coupling the wireless network to the wireline network, the gateway configured to intercept the request and to determine a location of a billing system, the gateway further configured to forward a request for funds to the billing system, wherein the request for funds is embedded in the content request;
the billing system configured to determine whether an account of a subscriber includes sufficient funds and to reserve funds in an amount of the fee without disclosing an identity of a subscriber of the device to the server if the account includes sufficient funds, the billing system further configured to direct the server to deliver the requested content to the subscriber at the wireless device and to confirm a charge in an amount of the reserved funds upon successful submission for delivery of the content.

In accordance with a ninth aspect of the present invention, there is a processing system comprising:
a processor; and
a storage medium having stored therein instructions which, when executed by the processor, cause the processing system to perform a process comprising:
   receiving a request for content associated with a fee, wherein the content is provided by a content provider at a wireline network; and
   charging the fee to an account of a wireless subscriber without disclosing a subscriber's identity to the content provider.
In accordance with a tenth aspect of the present invention, there is an apparatus comprising:
   means for receiving request for content associated with a fee, wherein the content to be provided by a content provider on a wireline network;
   means for charging the fee to an account of a wireless subscriber without disclosing to the content provider an identity of a subscriber to whom the content is directed; and
   means for providing the subscriber at the wireless device with the requested content if the account includes sufficient funds.
In accordance with an eleventh aspect of the present invention, there is a method of operating a network, the network comprising:
   a wireless network which interfaces with mobile wireless devices;
   a wired network which interfaces with content providers and with at least one commerce broker for facilitating payments to the content provider; and
   a gateway through which the wireless network interfaces with the wired network, enabling communication between the mobile devices and the content providers;
   and the method comprising:
      transmission to a mobile wireless device of data comprising an offer of content associated with a fee and a resource identifier pointing to the commerce broker;
      interception of the resource identifier by the gateway;
      in response to a request for the offered content from the mobile device, charging the fee to an account of a subscriber corresponding to the resource identifier, without disclosing to the content provider an identity of the subscriber.

### BRIEF DESCRIPTION OF THE DRAWINGS

The present invention is illustrated by way of example and not limitation in the figures of the accompanying drawings, in which like references indicate similar elements and in which:

Figure 1 illustrates a network environment in which mobile devices may communicate with content provider serves according to one embodiment of the present invention;

Figure 2 illustrates a processing system according to one embodiment of the present invention;

Figure 3 illustrates components of a commerce broker according to one embodiment of the present invention;

Figure 4 illustrates a graphical user interface presented to a wireless subscriber according to one embodiment of the present invention;

Figure 5 is a flow diagram showing a process of selecting an Internet service on a mobile device by a wireless subscriber according to one embodiment of the present invention;

Figure 6 is a flow diagram showing a process of billing a wireless subscriber's account according to one embodiment of the present invention; and

Figure 7 is illustrates confirmation of delivery interface according to one embodiment of the present invention.

### DETAILED DESCRIPTION

A method and apparatus for wireless subscriber billing are described. Note that in this description, references to "one embodiment" or "an embodiment" mean that the feature being referred to is included in at least one embodiment of the present invention. Further, separate references to "one embodiment" in this description do not necessarily refer to the same embodiment; however, neither are such embodiments mutually exclusive, unless so stated and except as will be readily apparent to those skilled in the art. Thus, the present invention can include any variety of combinations and/or integrations of the embodiments described herein.

The present invention discloses a method and system for billing a wireless subscriber for requesting services or goods provided by a content provider at a wireline network, i.e. Internet. A billing account of the wireless subscriber is charged a fee requested by the content provider, without disclosing an identity of the wireless subscriber to the content provider.

The term "content provider", as used herein, means a seller of digital goods and/or physical goods. The term "digital goods sellers", as used herein, means software sellers who transmit software and/or data to a wireless device, such as images, ringtones, phone upgrades, Java games, pictures, streaming audio/video data, and Moving Pictures Experts Group (MPEG) Audio Layer 3 (MP3) files. The term "digital goods sellers", as used herein, also means content sellers who charge a fee for access/usage of their content within a mobile device or PC browser environment, such as greeting cards, subscription content (e.g., Wall Street Journal), interactive or on-line fee-based Wireless Access Point (WAP) or Short Message Service (SMS) games, location-based yellow pages. It will also be appreciated that the term "wireless subscriber", as used herein, means a user of a mobile device who subscribes to wireless telecommunications services provided by any of a variety of mobile companies, such as Verizon, Inc. and AT&T Wireless, Inc.

### Exemplary Architecture

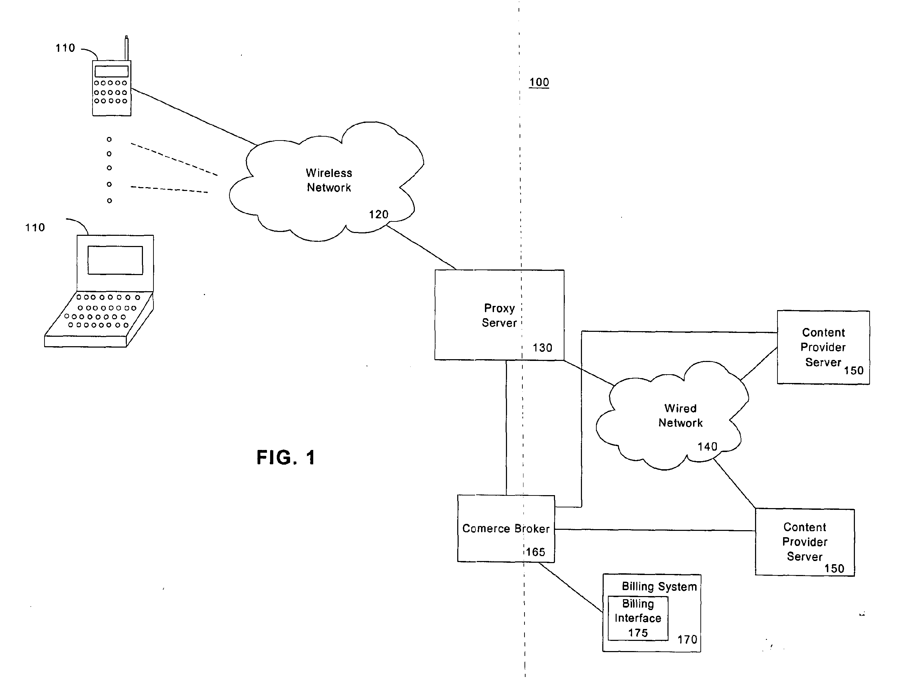

Figure 1 illustrates a network environment 100 in which the described method and apparatus may be implemented. A number of mobile devices 110, i.e. clients, may be connected to a wireless network 120. Each of the mobile devices may be, for example, a cellular telephone, personal digital assistant (PDA), notebook computer, two-way pager, or other wireless device. The wireless network 120 is connected to a wired network 140 via a proxy gateway 130. In one embodiment the wired network 140 is the Internet.

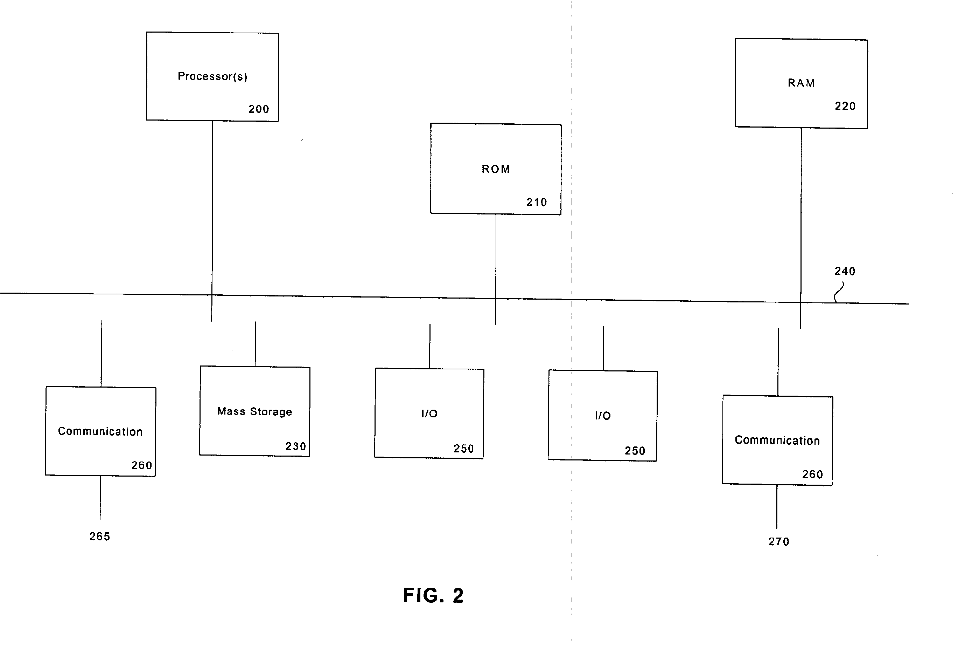

The proxy gateway 130, which can be a WAP gateway, enables communication between the mobile devices 110 and content provider servers 150 of the wired network 140. The physical processing platforms which embody the proxy gateway 130, the content provider servers 150 located on the wired network 140, the commerce broker 165 and the billing system 170 may include processing systems such as conventional personal computers (PCs) and/or server-class computer systems according to various embodiments of the invention. Figure 2 illustrates an example of such a processing system at a high level. The processing system of Figure 2 includes one or more processors 200, read-only memory (ROM) 210, random access memory (RAM) 220, and a mass storage device 230 coupled to each other on a bus system 240. The bus system 240 includes one or more buses, which may be connected to each other through various bridges, controllers and/or adapters, which are well known in the art. For example, the bus system 240 may include a 'system bus', which may be connected through an adapter to one or more expansion, such as a peripheral component interconnect (PCI) bus or an extended industry standard architecture (EISA) bus. Also coupled to the bus system 240 are a the mass storage device 230, one or more input/output (I/O) devices 250 and one or more data communication devices 260 to communicate with remote processing systems via one or more communication links 265 and 270, respectively. The I/O devices 250 may include, for example, any one or more of a display device, a keyboard, a pointing device (e.g., mouse, touchpad, trackball), an audio speaker.

The processor(s) 200 may include one or more conventional general-purpose or special-purpose programmable microprocessors, digital signal processors (DSPs), application specific integrated circuits (ASICs), or programmable logic devices (PLD), or a combination of such devices. The mass storage device 230 may include any one or more devices suitable for storing large volumes of data in a non-volatile manner, such as magnetic disk or tape, magneto-optical storage device, or any of various types of Digital Video Disk (DVD) or Compact Disk (CD) based storage or a combination of such devices.

The data communication device(s) 260 each may be any devices suitable for enabling the processing system to communicate data with a remote processing system over a data communication link, such as a wireless transceiver or a conventional telephone modem, a wireless modem, an Integrated Services Digital Network (ISDN) adapter, a Digital Subscriber Line (DSL) modem, a cable modem, a satellite transceiver, an Ethernet adapter, or the like. At least one of communication links may be a wireless link, to provide communication between mobile devices and a wireless network.

In one embodiment of the invention the proxy gateway 130 operates as a proxy for transmitting various requests from the mobile devices 110 to the servers 150 on the wired network 140 and for transmitting responses from the servers 150 to the mobile devices 110. One example of a device which does this is the Mobile Access Gateway from Openwave Systems of Redwood City, California. It will be appreciated that while proxy gateway 130 is shown as a single entity, the proxy and gateway functions can be distributed between separate physical platforms.

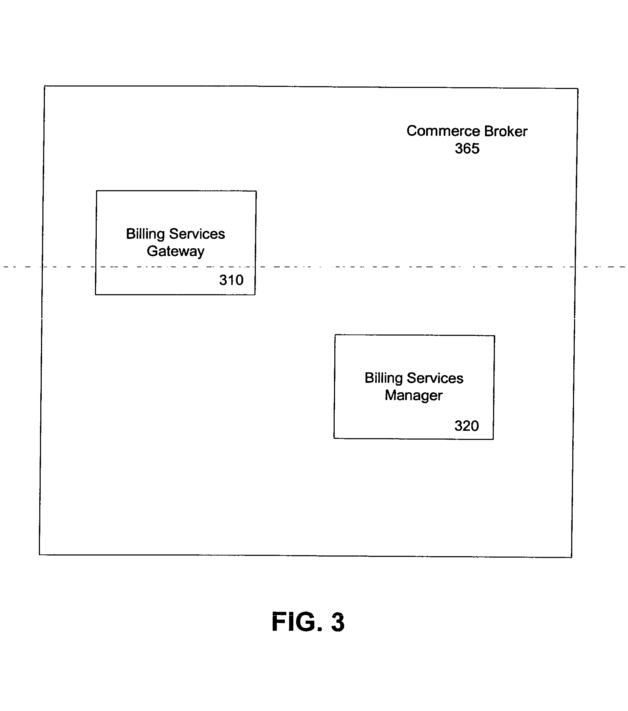

In one embodiment the proxy gateway 130 is connected to a commerce broker 165 to facilitate transaction payments for online services accessed by wireless subscribers on the wireline network. Components of the commerce broker 165 are illustrated in Figure 3 according to one embodiment of the invention. The commerce broker 365 includes a billing services gateway 310 and a billing services manager 320. The commerce broker 165 is connected to a billing system 170 which includes a billing interface 175. The billing interface 175 may be part of the billing system 170 or may be a separate module residing on a separate processing system. In one embodiment the commerce broker 165 is part of the billing system's intranet. The billing system 170 may be operated by a wireless service provider, credit card services provider, secure cash (i.e., digital wallet) services provider, or debit card services provider, etc. There may be several billing systems 170 and several commerce brokers 165 to allow the content providers to specify which billing system to utilize for transactions.

### Methodology

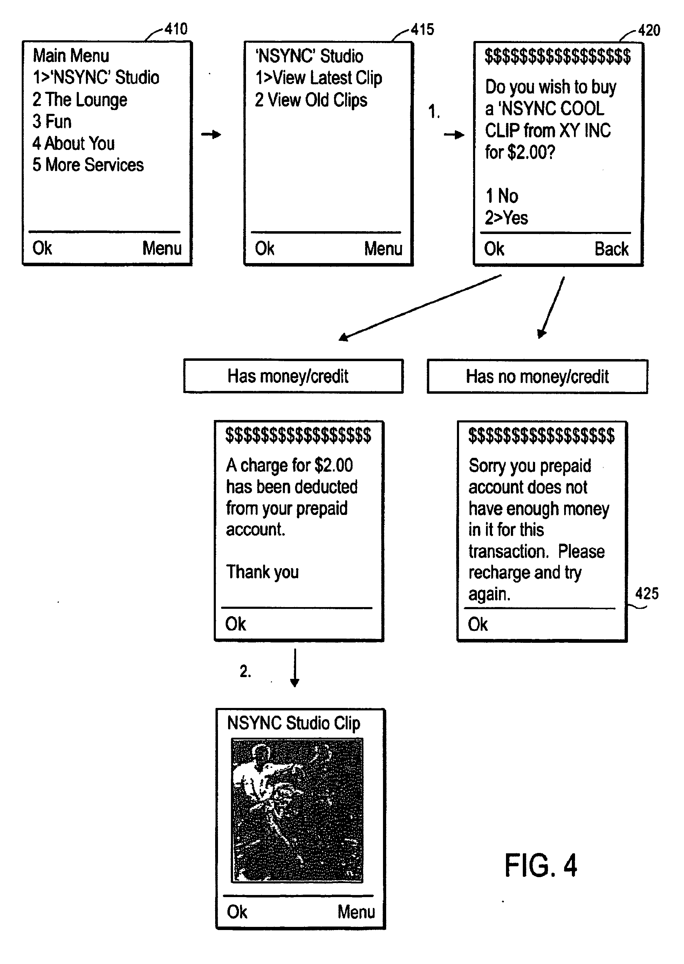

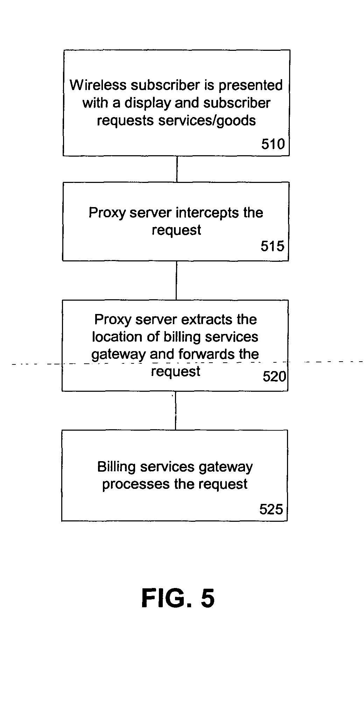

With these concepts in mind an embodiment of the present invention can be further explored with reference to Figure 5. Figure 5 shows a process of selecting an Internet service on a mobile device by a wireless subscriber. At 510 a wireless subscriber is presented with a display on the screen of a mobile device comprising a link to a service provided by an online content provider. Figure 4 illustrates an interface that may be presented to the wireless subscriber. Upon selecting "NSYNC Studio" 410, the wireless subscriber is presented with an interface 415 allowing him/her to view the latest video clip of the music band or view old clips that the wireless subscriber already purchased. At 515 of Figure 5, upon the wireless subscriber selecting to view the new clip, the proxy gateway 130 intercepts the request comprising information associated with the "View new clip" link, such as a request to a content provider specifying the location of the requested data. The content provider of the NSCYNC video clips, upon presenting the user with the link to view new clips, embeds a Uniform Resource Identifier (URI) pointing to the billing services gateway 310 in a deck or in a redirect that is sent to the subscriber mobile device. The URI is included in the information associated with the "View new clip" link and is intercepted by the proxy gateway 130 as part of the request. The content provider may construct the URI utilizing a base Uniform Resource Locator (URL) of the billing services gateway 310 that is passed to the content provider by the proxy gateway 130 in a header of every outgoing request. The proxy gateway 130 may include a configuration file that sets the base URL of the billing services gateway 310. It will be appreciated that the base URL may be passed via other methods and the invention is not limited to the method described above. Information that is associated with the "View new clip" includes a Request for Funds generated by the content provider offering the subscriber to view new NSYNC clip, that is intercepted by the proxy gateway 130.

In one embodiment the Request for Funds comprises the following fields: transaction identifier specified by the content provider, partner identifier, item name, amount, currency, return URL, shared secret signature of the content provider. Functions of these fields will be apparent from the following discussion. In one embodiment the Request for Funds is an HTTP request. In order to ensure secure transactions the fields of the Request for Funds may be Message Digest 5 (MD5) hashed in order to ensure that data cannot be changed. Alternatively, an MD5 signature computed utilizing all the fields of the Request for Funds may be attached to the clear, i.e. not hashed, Request for Funds. The shared secret signature of the content provider field may always be hashed. The Request for Funds may also be encrypted. Upon receiving the request from the wireless device comprising the Request for Funds, the proxy gateway at 520 of Figure 5 passes the Request for Funds to the billing services gateway 310.

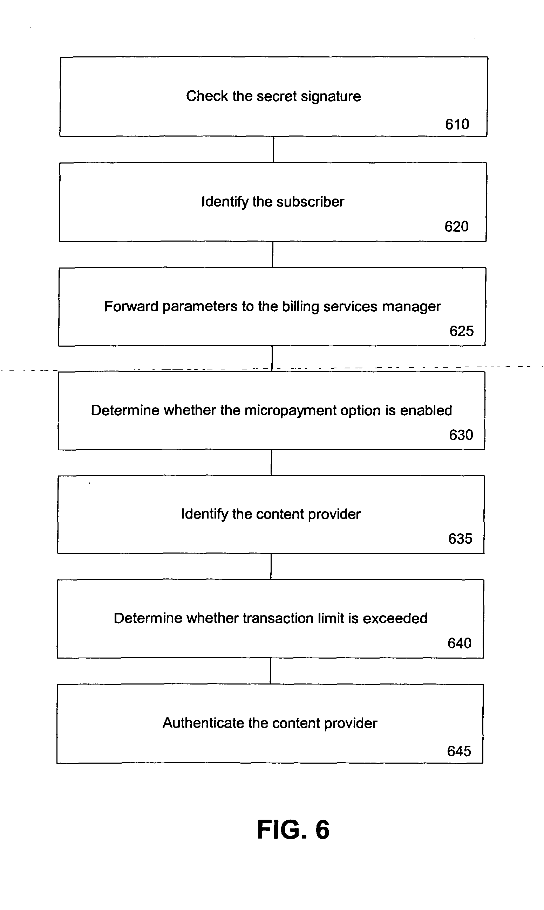

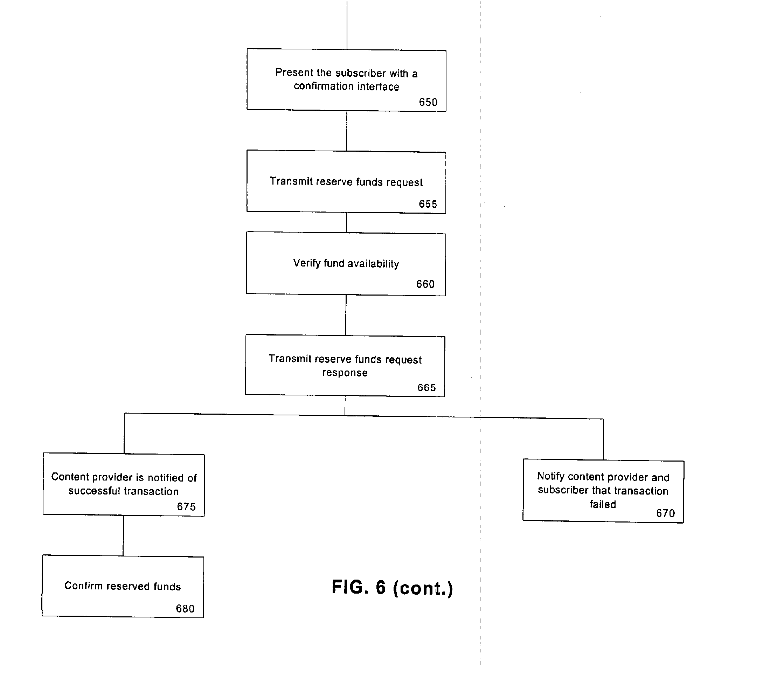

At 525 the billing services gateway 310 receives and processes the request. The processing of the request is described with reference to Figure 6. In one embodiment the Billing services gateway 310 accepts only those Requests for Funds that include the correct shared secret signature of the content provider. The signature may be checked at 610 by utilizing an MD5 hash on a whitespace-free version of the HTTP request without the signature itself. At 620 the billing services gateway 310 identifies the subscriber by parsing a header including a unique subscriber identification (ID). Every request from the subscriber's wireless device includes a unique ID in one of the headers. The subscriber ID is utilized to identify prepaid or postpaid account to be charged by the billing system 170 upon completion of the transaction. At 625, upon authenticating the content provider and identifying the subscriber, the billing services gateway 310 forwards the parameters of the URI to the billing services manager 320 removing the verified signature and adding the subscriber ID.

The billing services manager 320 maintains a database of global configuration parameters. In one embodiment the global configuration parameters database contains the following variables: micropayments enabled, maximum size of micropayment transactions, base currency. The micropayments enabled variable specifies whether the micropayments are enabled globally. The maximum size of micropayment transaction variable specifies the maximum amount allowed to be spent per transaction. The content provider may specify the maximum amount allowed per transaction. The content provider may also specify the maximum monthly limit a subscriber may spend on services and goods provided by the content provider. The operator of the billing system, such as wireless services provider, may specify its own transaction limits to ensure that the services and goods are paid for. For example, the entity may specify a lower transaction limit for subscribers with a history of late payments. If the transaction limit is specified by content provider and/or the billing system entity are exceeded, the wireless subscriber is notified that the transaction cannot be completed due to the exceeded transaction limits. The base currency is utilized for local pricing.

In one embodiment, the billing services manager 320 maintains a content provider's database in order to persist information about the content providers. This information may includes unique identification (ID), name, base domain for authenticating requests, shared secret key, password for authenticating direct Server-to-Server requests, revenue share for settling with content providers, micropayment enabled variable, billing system identification. In one embodiment a configuration file may be used to set up all content providers in the database. Content providers may have several versions of a base domain name. In one embodiment, the base domain name field may support wildcards, for example *amazon.com, where *"***"* represents an arbitrary sequence of characters. If a content provider has several domain names, the content provider may need more than one entry in the database for security purposes.

At 630 of Figure 6, upon receiving the Request for Funds from the billing services gateway 310, the billing services manager 320 determines whether the micropayments option is enabled both globally and for the particular content provider sending the request. At 635 the billing services manager 320 identifies the content provider by analyzing the partner identifier transmitted in the Request for Funds. Upon determining whether the micropayments are enabled and identifying the content provider, the Billing services manager 320 at 640 ensures that the requested transaction does not exceed the transaction limit. At 645 the billing services manager 320 also ensures that the content provider may utilize the billing services by checking whether the base domain name in the configuration parameters matches to the domain name of the return URL submitted with the Request for Funds. If all the checks were successful, (i.e., the Request for Funds included the correct signature, the size of the transaction did not exceed the maximum size, and the domain name of the return URL matched the base domain name) the billing services manager 320 at 650 presents the Confirmation Dialog to the subscriber to authorize the charge for receiving goods or services. An example of the configuration dialog is illustrated in Figure 4, where upon clicking on View New Clip, the subscriber is presented with an interface 420 and is prompted to confirm authorization to charge a fee to the prepaid account or to be billed later for viewing the NSCYNC new video clip.

In a case of the subscriber's account being a postpaid account, upon the subscriber confirming the authorization to charge the fee, the billing services manager 320 at 656 logs information that transaction is authorized for a specified dollar amount in a database. The content provider is notified of a successful transaction at 661, upon receipt of which the content provider may provide the subscriber with the requested content.

If the subscriber's account is pre-paid account, then upon the subscriber confirming the authorization to charge the fee, the billing services manager 320 at 655 of Figure 6 sends a Reserve Funds request to the Billing System 170. The Reserve Funds request may comprise the following fields: subscriber ID, Subscription ID, URL in order to allow complete billing records to be generated, content provider ID, amount, proposed transaction ID. The billing system 170 may generate its own transaction ID in order to ensure that each transaction is assigned a unique ID value. A transaction is kept active until the reserved funds are confirmed. Upon receiving the Reserve Funds request, the Billing System 170 at 660 of Figure 6 verifies whether the subscriber's account contains enough funds to cover the fee of the transaction utilizing the fields of the Reserve Funds request. If the wireless subscriber's account is prepaid type account, the funds equal to the transaction fee are reserved by the billing system 170. In one embodiment, the billing system 170 marks the reserved amount unavailable for other transactions. If the subscriber's account is of post-billing type, then the billing system 170 reserves the funds by generating a record indicating the amount that should be billed to the subscriber. Upon reservation of the funds, the billing system 170 at 665 transmits a Request Funds Success Response to the billing services manager 320 indicating that the reservation of funds operation was successful.

If there are no funds to be reserved in the subscriber's account, the billing system 170 notifies the billing services manager 320 at 665 that the transaction failed by transmitting Request Funds Failed Response at 665. Upon receiving the Request Funds Failed Response the billing services manager 320 at 670 notifies the content provider that the transaction has failed due to lack of funds in the subscriber's account. In addition, the billing services manager 320 notifies the subscriber via the billing services gateway 310 and proxy server 130 that the transaction failed due to lack of funds in the subscriber's account. The subscriber may be presented with an interface 425 illustrated in Figure 4. Communication between billing services manager 320 and billing system 170 may be conducted via the billing interface 175.

Upon receiving the Reserve Funds Success Request, the billing services manager 320 at 675 provides the content provider with the status of the transaction indicating that the transaction was successful. In addition the billing services manager 320 directs the proxy gateway 130 via the billing services gateway 310 to forward the request for services/goods generated by the subscriber to the content provider. The subscriber is then provided with the requested content. It will noted that subscriber's identification, i.e. subscriber's identity, is not provided to the content provider throughout the billing process described above.

In one embodiment, the proxy gateway, upon direction of the billing services manager 320 via the billing services gateway 310, presents the wireless subscriber with a page located at the result URL embedded in the received Request for Funds. Upon delivery of the requested content, the billing services manager 320 at 680 directs the billing system 170 to confirm the reserved funds by transmitting a Confirm Funds request. If the requested content was not delivered to the subscriber, the billing services manager 320 transmits a Cancel Funds request to the billing system 170, upon receipt of which, the billing system 170 cancels the reserved funds and credits the subscriber's account.

The requested content, such as ringtones or logos, may be delivered by the content provider to the subscriber over either a Short Message Service (SMS) channel or a proprietary downloading agent, for example. In this case, the content providers have the ability to know that the content was delivered to the subscribers by return receipts provided by the delivery mechanisms. However, the proxy gateway and the billing services gateway 310 do not receive any information in order to allow the billing services manager 320 to make a decision to confirm the reserved funds or to cancel the funds. The content provider upon delivering of the requested data sends a Confirmation of Delivery request to the billing services gateway 310. The Confirmation of Delivery may be an out-of-band transaction that is structured as a Server-to-Server interface using a Simple Object Access Protocol (SOAP) based interface between the billing services gateway 310 and the content provider. SOAP is a message based protocol based on Extensible Markup Language (XML) for accessing services on the Web. It will be appreciated that other protocols may be used, and the invention is not limited to the described protocol.

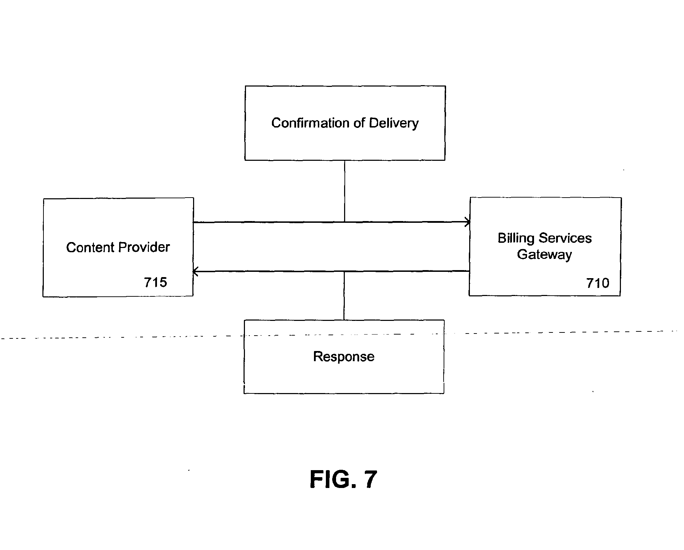

Figure 7 illustrates a confirmation of delivery interface. The content provider 715 sends a confirmation of delivery request to the billing services gateway 710 via an HTTP request. The billing services gateway 710 then acknowledges the receipt of the Confirmation of Delivery via an HTTP response. The Confirmation of Delivery request identifies the transaction and specifies whether the requested content delivery was successful. Upon a notification of the successful content delivery, the billing services gateway 310 forwards the Confirmation of Delivery to the billing services manager 320 in order to cause the billing system 170 to confirm the reserved funds. Upon a notification of a failed content delivery, the billing services manager 320 directs the billing system 170 to send Cancel Reserved Funds message to the billing system 170, upon receipt of which the billing system 170 cancels the reservation of the funds. If the billing services gateway 310 does not receive a Confirmation of Delivery message within a predetermined time interval, the billing services gateway 310 may direct the billing services manager 320 to cancel the reservations of the funds and credit back the subscriber's account. All of the communications relating to the Confirmation of Delivery may be self-authenticating by utilizing Secure Hypertext Transfer Protocol (HTTP-S) with client certificates. If the requested content is a tangible object to be delivered to the subscriber, for example, via a United States Postal Services (USPS), then the Confirmation of Delivery message may be sent to the billing services gateway 310 upon the placement of the requested content with the USPS.

It will be appreciated that the functions of the commerce broker 165 described above may be integrated with those of the proxy server 130, eliminating the need to include a separate commerce broker 165 in the described system architecture.

It will further be appreciated that the above described system and method is not limited in application to wireless subscribers. The described method and apparatus may also be utilized to provide billing services without disclosing identity of wireline subscribers requesting content available on a wireline network.

It will be recognized that many of the features and techniques described above may be implemented in software. For example, the described operations may be carried out in the commerce broker 165 or other suitable device in response to its processor(s) executing sequences of instructions contained in memory of the device. The instructions may be executed from a memory, such as RAM, and may be loaded from a persistent store, such as a mass storage device, and/or from one or more other remote processing systems. Likewise, hardwired circuitry may be used in place of software, or in combination with software, to implement the features described herein. Thus, the present invention is not limited to any specific combination of hardware circuitry and software, nor to any particular source of software executed by the processing systems.

Thus, a method and apparatus for billing wireless subscribers for accessing Internet services have been described. Although the present invention has been described with reference to specific exemplary embodiments, it will be evident that various modifications and changes may be made to these embodiments without departing from the broader spirit and scope of the invention as set forth in the claims. Accordingly, the specification and drawings are to be regarded in an illustrative sense rather than a restrictive sense.

## Claims

1. A method comprising:
operating a processing system on a network to receive a request for content with which a fee is associated, wherein the content is to be provided by a content provider on the network; and
operating the processing system to charge the fee to an account of a subscriber requesting the content without disclosing to the content provider the identity of the subscriber.

2. The method of claim 1 further comprising operating the processing system to provide the subscriber with the requested content if the account includes sufficient funds.

3. The method of claim 2 further comprising operating the processing system to reserve the funds in an amount of the fee if the account includes sufficient funds.

4. The method of claim 3 further comprising operating the processing system to confirm the funds upon notification of submission of requested content for delivery to the subscriber.

5. The method of claim 1 further comprising operating the processing system to determine whether the fee exceeds a predefined transaction limit and to notify the subscriber and the content provider of a failure of a transaction if the fee exceeds the transaction limit.

6. The method of claim 1, wherein the network is a wireline computer network, and wherein the subscriber is a subscriber of wireless telecommunications services using a wireless device on a wireless network.

7. The method of claim 6, wherein the processing system is a gateway between the wireline computer network and the wireless telecommunications network.

8. A processing system comprising:
at least one processor; and
at least one storage facility accessible to the at least one processor and storing software which, when executed by the at least one processor, causes the processing system to perform a process that includes:
receiving a content request comprising a request for funds generated by a content provider;
determining whether an account of a subscriber includes sufficient funds; and
signaling a network server to provide the requested content to the subscriber without disclosing the subscriber's identity if the account includes sufficient funds.

9. The processing system of claim 8, wherein the processing system is coupled to a wireline network and to a wireless network, the network server being located on the wireline network, wherein the subscriber is a subscriber of wireless telecommunications services on the wireless network, and wherein the content is provided to the subscriber at a wireless device of the subscriber operating on the wireless network.

10. The processing system of claim 8, wherein the processing system is further configured to reserve funds in an amount of a fee associated with the requested content if the account includes sufficient funds.

11. The processing system of claim 10 wherein the processing system is further configured to cancel the reserved funds if a notification of a successful submission of the requested content for delivery to the subscriber by the server is not received by the processing system within a predetermined time interval.

12. The processing system of claim 8 wherein a location of a billing system is embedded in the request for content.

13. A processing system coupling a wireless network to a wireline network, the processing system comprising:
at least one processor; and
at least one storage facility accessible to the at least one processor and storing software which, when executed by the at least one processor, causes the processing system to perform a process that includes:
receiving a request for content with which a fee is associated, the request indicating a location of a billing system;
forwarding the request to the billing system upon authenticating a content provider associated with the content;
determining whether an account of a user includes sufficient funds in relation to the fee;
reserving funds in the account to pay the fee if the account includes sufficient funds; and
confirming the reserved funds without disclosing the identity of the user to the content provider if the requested content is successfully submitted for delivery to the user.

14. The method of claim 13, wherein the processing system is a gateway between the wireline network and the wireless network, and wherein the request is sent from a wireless device operating on the wireless network and intercepted by the gateway, the wireless device associated with the user.
